# EUROPÄISCHE PATENTANMELDUNG

(11) **EP 1 081 400 A1**
(43) Veröffentlichungstag der Anmeldung: **07.03.2001**
(21) Anmeldenummer: 00890237.1
(22) Anmeldetag: 31.07.2000
(51) Int. Cl.: F16D 3/56, F16D 25/04

(54) **Kupplungsanordnung in einem Antriesstrang**

(30) Priorität: 31.08.1999 AT 149399
(71) Anmelder: Ellergon Antriebstechnik GmbH, 5300 Hallwang/Salzburg (AT)
(72) Erfinder: Geislinger, Matthias, 5026 Salzburg (AT)
(74) Vertreter: Hübscher, Heiner, Dipl.-Ing.

(57) **Zusammenfassung**

Es wird eine Kupplungsanordnung in einem Antriebsstrang mit einer drehelastischen Kupplung (1) beschrieben, deren gegenüber einem Innenteil (12) drehfedernd abgestützter Außenteil (11) mit einem inneren, trommelartigen Reibring (5) einer Schaltkupplung (4) drehfest verbunden ist, die einen den Reibring (5) umschließenden Außenring (6) mit radial druckluftbeaufschlagbaren Reibsegmenten (7) aufweist. Um vorteilhafte Konstruktionsbedingungen zu schaffen, wird vorgeschlagen, daß der Außenteil (11) der drehelastischen Kupplung (1) den inneren Reibring (5) der Schaltkupplung (4) bildet.

## Beschreibung

Die Erfindung bezieht sich auf eine Kupplungsanordnung in einem Antriebsstrang mit einer drehelastischen Kupplung, deren gegenüber einem Innenteil drehfedernd abgestützter Außenteil mit einem inneren, trommelartigen Reibring einer Schaltkupplung drehfest verbunden ist, die einen den Reibring umschließenden Außenring mit radial druckluftbeaufschlagbaren Reibsegmenten aufweist.

Um für eine aus einer drehelastischen Kupplung und einer Schaltkupplung zusammengesetzte Kupplungsanordnung den Bauaufwand zu verringern und eine gedrängte Bauweise sicherzustellen, ist es bekannt (AT 368 257 B), den auf dem Innenteil einer drehelastischen Kupplung drehbar gelagerten Außenteil, der sich in Umfangsrichtung über radiale Blattfedern am Innenteil abstützt, in zwei axiale Abschnitte zu unterteilen und zwischen diesen axialen Abschnitten mit diesen verbundene Kupplungsscheiben der Schaltkupplung anzuordnen. Da diese Kupplungsscheiben über die axialen Abschnitte des Außenteiles der drehelastischen Kupplung radial vorstehen und in ein Gehäuse der Schaltkupplung eingreifen, kann durch eine axiale Beaufschlagung der axial verschiebbar auf dem Innenteil gelagerten Abschnitte des Außenteils der drehelastischen Kupplung die Schaltkupplung betätigt werden, um die mit den Abschnitten des Außenteils der drehelastischen Kupplung verbundenen Kupplungsscheiben an die im Gehäuse der Schaltkupplung vorgesehenen Reibringen über einen Reibbelag axial anzudrücken. Diese bekannte Kupplungsanordnung ist jedoch auf den Einsatz axial beaufschlagbarer Schaltkupplungen beschränkt und nicht auf Schaltkupplungen anwendbar, die einen inneren, trommelartigen Reibring und einen diesen Reibring umschließenden Außenring mit radial verschiebbar gelagerten Reibsegmenten aufweisen, wobei die Reibsegmente mit Hilfe von Druckluft über einen aufblasbaren Schlauch gegen die Kraft von Rückstellfedern beaufschlagt werden. Diese druckluftbeaufschlagbaren Schaltkupplungen werden nach wie vor mit dem inneren, trommelartigen Reibring an den Außenteil der drehelastischen Kupplung angeflanscht, was bei einem entsprechenden Bauaufwand eine vergleichsweise große Baulänge erfordert.

Der Erfindung liegt somit die Aufgabe zugrunde, eine Kupplungsanordnung in einem Antriebsstrang der eingangs geschilderten Art so auszugestalten, daß mit einem verringerten Bauaufwand eine kurze Baulänge für die gesamte Kupplungsanordnung sichergestellt werden kann.

Die Erfindung löst die gestellte Aufgabe dadurch, daß der Außenteil der drehelastischen Kupplung den inneren Reibring der Schaltkupplung bildet.

Da der Außenteil der drehelastischen Kupplung zugleich den inneren Reibring der Schaltkupplung bildet, liegt die drehelastische Kupplung innerhalb des axialen Erstreckungsbereiches des inneren, trommelartigen Reibringes der Schaltkupplung, was eine im wesentlichen auf die axiale Länge der Schaltkupplung beschränkte Baulänge der gesamten Kupplungsanordnung ermöglicht. Dazu kommt ein vergleichsweise geringer Bauaufwand, weil für den Außenteil der drehelastischen Kupplung und den inneren Reibring der Schaltkupplung ein gemeinsamer Baukörper eingesetzt werden kann, so daß sich in vorteilhafter Weise eine kompakte Kupplungsanordnung ergibt, die sowohl den Anforderungen der drehelastischen Kupplung als auch der Schaltkupplung gerecht werden kann.

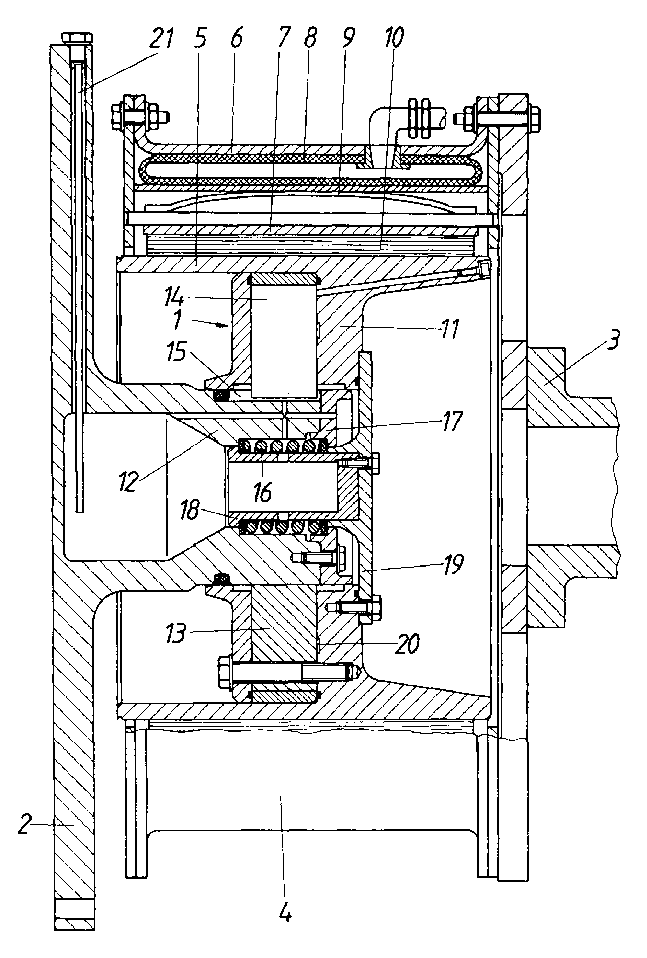

In der Zeichnung ist der Erfindungsgegenstand beispielsweise dargestellt, und zwar wird eine erfindungsgemäße Kupplungsanordnung in einem Antriebsstrang in einem vereinfachten Axialschnitt gezeigt.

Die drehelastische Kupplung 1 der dargestellten Kupplungsanordnung weist einen Anschlußflansch 2 auf, über den diese Kupplung 1 beispielsweise mit einer Abtriebswelle eines Verbrennungsmotors verbunden werden kann, der einen Kompressor über ein Getriebe antreibt, dessen Abtriebswelle mittels einer Flanschnabe 3 an die Schaltkupplung 4 angeschlossen ist. Diese Schaltkupplung 4 besteht aus einem inneren, trommelartigen Reibring 5 und einem diesen Reibring 5 umschließenden Außenring 6, in dem über den Umfang verteilte Reibsegmente 7 radial verschiebbar gelagert sind, die mit Hilfe von Druckluft über einen aufblasbaren Schlauch 8 gegen die Kraft von Rückstellfedern 9 beaufschlagbar werden können und über Reibbeläge 10 mit dem inneren Reibring 5 zusammenwirken.

Der Reibring 5 ist im Gegensatz zu herkömmlichen Kupplungsanordnungen dieser Art Bestandteil des Außenteiles 11 der drehelastischen Kupplung 1. Dieser Außenteil 11 ist auf einem den Anschlußflansch 2 tragenden Innenteil 12 drehbar gelagert und trägt über den Umfang verteilte, zwischen Zwischenstücken 13 eingespannte, radiale Blattfedern 14, die in axiale Nuten 15 des Innenteiles 12 eingreifen und den Außenteil 11 gegenüber dem Innenteil 12 in Umfangsrichtung drehfedernd abstützen. Zur axialen Ausrichtung des Außenteiles 11 gegenüber dem Innenteil 12 der drehelastischen Kupplung 1 ist eine axiale Schraubenfeder 16 vorgesehen, die sich einerseits an einem mit dem Innenteil 12 verschraubten Stützring 17 und anderseits an einem topfartigen Einsatz 18 abstützt, der über einen stirnseitigen Deckel 19 mit dem Außenteil 11 verbunden ist. Diese axiale Ausrichtung des Außenteiles 11 ist aufgrund der Ausbildung des inneren Reibringes 5 der Schaltkupplung als Teil des Außenteiles 11 der drehelastischen Kupplung 1 von Bedeutung, um allfällige axiale Verlagerungen, beispielsweise von nicht vermeidbaren Wärmedehnungen während der Ausrückung der Schaltkupplung 4 einfach ausgleichen zu können.

Die Blattfedern 14 der drehelastischen Kupplung 1 befinden sich zwischen den Zwischenstücken 13 in voneinander getrennten Kammern, die mit einem Hydraulikmittel gefüllt sind, das über eine Drosselspalte 20 aus den Kammern verdrängt werden kann, um eine entsprechende Dämpfungswirkung der drehelastischen Kupplung 1 zu erreichen. Über einen Füllstandsfühler 21 kann die erforderliche Hydraulikmittelmenge überwacht werden.

Wegen der Ausbildung des Außenteiles 11 der drehelastischen Kupplung 1 zugleich als innerer, trommelartiger Reibring 5 der Schaltkupplung 4 wird ein einfacher Aufbau der Kupplungsanordnung sichergestellt, weil nicht nur auf einen gesonderten inneren Reibring 5 für die Schaltkupplung 4, sondern auch sonst für den Anschluß dieses Reibringes 5 an den Außenteil 11 der drehelastischen Kupplung 1 erforderliche Befestigungsmittel verzichtet werden kann. Darüber hinaus wird eine kurze, im wesentlichen auf die erforderliche axiale Länge der Schaltkupplung 4 beschränkte Baulänge der Kupplungsanordnung erreicht, ohne die Eigenschaften der beiden zusammengebauten Kupplungen 1 und 4 nachteilig zu beeinflussen.

## Patentansprüche

1. Kupplungsanordnung in einem Antriebsstrang mit einer drehelastischen Kupplung (1), deren gegenüber einem Innenteil (12) drehfedernd abgestützter Außenteil (11) mit einem inneren, trommelartigen Reibring (5) einer Schaltkupplung (4) drehfest verbunden ist, die einen den Reibring (5) umschließenden Außenring (6) mit radial druckluftbeaufschlagbaren Reibsegmenten (7) aufweist, dadurch gekennzeichnet, daß der Außenteil (11) der drehelastischen Kupplung (1) den inneren Reibring (5) der Schaltkupplung (4) bildet.
